# FASCICULE DE BREVET EUROPEEN

(11) **EP 1 565 368 B1**
(45) Date de publication et mention de la délivrance du brevet: **13.10.2010**
(21) Numéro de dépôt: 03772336.8
(22) Date de dépôt: 14.11.2003
(51) Int. Cl.: B60T 13/57, B60T 8/32

(54) **DISPOSITIF DE COMMANDE DE FREIN COMPORTANT UN SERVOMOTEUR PERFECTIONNE**
BREMSSTEUERVORRICHTUNG MIT EINEM VERBESSERTEN SERVOMOTOR
BRAKE CONTROL DEVICE COMPRISING AN IMPROVED SERVOMOTOR

(30) Priorité: 22.11.2002 FR 0214785
(43) Date de publication de la demande: 24.08.2005
(73) Titulaire: ROBERT BOSCH GMBH, 70442 Stuttgart (DE)
(72) Inventeur: RICHARD, Philippe, F-77500 Chelles (FR); MALIGNE, Jean-Charles, F-93300 Aubervilliers (FR); VERBO, Ulysse, F-93600 Aulnay-sous-Bois (FR)
(74) Mandataire: Hurwic, Aleksander Wiktor
(86) Numéro de dépôt international: PCT/EP2003/012750
(87) Numéro de publication internationale: WO 2004/048179

(56) Documents cités:
- EP-A- 0 950 595
- EP-A- 1 227 020
- US-A- 6 065 388
- US-A1- 2002 056 362

## Description

La présente invention concerne un servomoteur perfectionné et un dispositif de commande de frein muni de ce servomoteur.

On connaît déjà dans l'état de la technique un servomoteur d'assistance pneumatique au freinage, du type comprenant :
- un organe de commande de ce servomoteur, mobile axialement, destiné à recevoir un effort de commande appliqué par un utilisateur,
- une enceinte pneumatique comportant deux chambres dites arrière et avant séparées par un piston pneumatique, et
- des moyens formant vannes pneumatiques comprenant :
   ■ des premier et second éléments complémentaires formant vanne de mise en communication de la chambre arrière avec la chambre avant, dits premier et second éléments de vanne d'équilibrage, et
   ■ des premier et second éléments complémentaires formant vanne de mise en communication de la chambre arrière avec une source de pression pneumatique, dits premier et deuxième éléments de vanne d'admission.

Habituellement, l'organe de commande, encore appelé plongeur, est destiné à transmettre un effort de freinage à une tige de commande d'un maître cylindre. Le piston pneumatique est lié à la tige de commande.

Une opération de freinage est commandée par le conducteur au moyen d'une pédale de frein reliée à l'organe de commande du dispositif de freinage.

La pression dans le maître cylindre évolue en fonction de l'effort exercé sur la pédale de frein, dit effort de freinage, de la façon suivante.

Initialement, l'effort de freinage est destiné à vaincre la pré-contrainte d'un ressort de rappel de l'organe de commande en position de repos. Le servomoteur demeure au repos. La pression dans le maître cylindre demeure constante.

L'effort de freinage augmentant, la pré-contrainte du ressort de rappel de l'organe de commande est vaincue et le servomoteur est activé. Or, habituellement, le servomoteur étant dans sa configuration de repos, il existe un jeu axial entre l'organe de commande et la tige de commande. De ce fait, l'activation du servomoteur provoque un saut de pression dans le maître cylindre, ceci à effort de freinage constant, puisque, compte tenu du jeu axial, l'organe de commande ne subit pas de réaction de la part de la tige de commande du maître cylindre.

On comprend donc que plus le saut de pression dans le maître cylindre est important, plus l'action sur la pédale de frein est rapidement efficace.

Le document EP 1 227 020 A montre un servomoteur d'après le préambule de la revendication 1.

Après annulation du jeu axial, la pression dans le maître cylindre augmente proportionnellement à l'effort de freinage, tout d'abord, suivant un rapport correspondant au rapport d'assistance du servomoteur, puis, après saturation de l'assistance, suivant un rapport inférieur au précédent.

L'invention a notamment pour but de proposer un servomoteur d'assistance pneumatique au freinage, du type précité, qui lors de son fonctionnement assure un saut de pression dans le maître cylindre plus élevé dans le cas d'un freinage urgent que dans le cas d'un freinage normal.

A cet effet, l'invention a pour objet un servomoteur d'assistance pneumatique au freinage, du type précité, caractérisé
en ce que l'organe de commande comprend des première et seconde parties, mobiles axialement l'une par rapport à l'autre, la première partie de l'organe de commande recevant l'effort de commande appliqué par l'utilisateur par l'intermédiaire de la seconde partie de l'organe de commande,
en ce que les moyens formant vannes comprennent un support tubulaire, monté flottant axialement dans l'enceinte pneumatique,
en ce que les premier et second éléments de vanne d'équilibrage sont portés respectivement par une extrémité d'équilibrage du support et le piston pneumatique,
en ce que les premier et deuxième éléments de vanne d'admission sont portés respectivement par la première partie de l'organe de commande et une extrémité d'admission du support,
en ce que les deux parties de l'organe de commande sont reliées entre elles par des moyens de réglage de leur position axiale relative en fonction de la puissance de l'effort appliqué à l'organe de commande, et
en ce qu'un troisième élément de vanne d'admission, complémentaire du deuxième élément de vanne d'admission est porté par la seconde partie de l'organe de commande, le deuxième élément de vanne d'admission étant destiné à coopérer avec le premier ou troisième élément de vanne d'admission selon la position axiale relative de deux parties de l'organe de commande.

Suivant des caractéristiques de différents modes de réalisation de ce servomoteur d'assistance pneumatique au freinage :
- les moyens de réglage de la position axiale relative des deux parties de l'organe de commande comprennent des moyens libérables de verrouillage de la première partie de l'organe de commande avec le piston pneumatique activés lorsque la distance entre cette première partie de l'organe de commande et le piston pneumatique se réduit au delà d'un seuil prédéterminé, le piston pneumatique et la première partie de l'organe de commande formant deux organes verrouillables mutuellement ;
- les moyens de verrouillage comprennent :
   ■ des moyens de rappel élastique sollicitant le piston pneumatique et la première partie de l'organe de commande à l'écart l'un de l'autre, dits moyens de rappel de la première partie de l'organe de commande,
   ■ des appuis axiaux complémentaires portés par l'un des deux organes verrouillables et une extrémité libre d'au moins un bras solidaire axialement de l'autre des deux organes verrouillables, ces appuis axiaux coopérant entre eux à l'encontre des moyens de rappel de la première partie de l'organe de commande, et
   ■ des moyens de libération des appuis axiaux complémentaires coopérant avec le bras à l'encontre d'une force élastique de rappel de ce bras en position de coopération des appuis complémentaires ;
- les moyens de réglage de la position axiale relative des deux parties de l'organe de commande comprennent au moins une cale, montée coulissante axialement sur le support, et, selon la position axiale relative de la cale dans l'enceinte, la course vers l'arrière de cette cale est limitée :
   ■ soit par une butée fixe de repos, déterminant une position de repos de la cale,
   ■ soit, relativement à la première partie de l'organe de commande, par une butée arrière ménagée sur cette première partie de l'organe de commande ;
- les moyens de libération des appuis axiaux complémentaires comprennent une came de libération ménagée sur la cale, destinée à coopérer avec une partie complémentaire du bras lorsque cette cale est en appui sur la butée fixe de repos ;
- la course de la seconde partie de l'organe de commande est limitée :
   ■ vers l'arrière et relativement à la cale, par une butée arrière ménagée sur cette cale,
   ■ vers l'avant et relativement à la première partie de l'organe de commande, par une butée avant ménagée sur cette première partie de l'organe de commande ;
- l'organe de commande a une forme générale de révolution d'axe coïncidant sensiblement avec celui du support, les moyens de réglage de la position axiale relative des deux parties de l'organe de commande comprenant au moins trois cales et trois bras répartis angulairement autour de l'axe de révolution de l'organe de commande ;
- les cales sont reliées entre elles par une bague de liaison montée coulissante sur le support ;
- le servomoteur comprend des moyens de rappel élastique sollicitant chaque cale et le support à l'écart l'un de l'autre, de façon notamment à rappeler le support vers le piston et ainsi lier élastiquement ce support à des déplacements du piston ;
- chaque bras, de préférence métallique, est rappelé en position de coopération des appuis complémentaires par déformation élastique de ce bras ;
- chaque bras est solidaire axialement de la première partie de l'organe de commande ;
- chaque bras est venu de matière avec un support annulaire métallique formant une extrémité avant de la première partie de l'organe de commande ;
- le servomoteur comprend des moyens de rappel élastique sollicitant la seconde partie de l'organe de commande et le piston pneumatique à l'écart l'un de l'autre ;
- le servomoteur comprend un palpeur destiné à la transmission d'effort entre l'organe de commande et une tige d'actionnement d'un maître cylindre, ce palpeur étant intercalé axialement, d'une part, entre des première et seconde faces d'appui destinées à être liées axialement à la tige d'actionnement, et d'autre part, entre la première face d'appui destinée à être liée à la tige d'actionnement et une face d'appui liée axialement à l'organe de commande ;
- la première face d'appui destinée à être liée à la tige d'actionnement délimite un disque de réaction, déformable élastiquement axialement, destinée à être lié axialement à la tige d'actionnement ;
- la seconde face d'appui destinée à être liée à la tige d'actionnement délimite une extrémité d'une bague d'entretoisement portée par un organe de guidage axial de l'organe de commande, la face d'appui liée axialement à l'organe de commande délimitant un anneau d'appui logé dans la bague d'appui.
- la source de pression pneumatique est l'air atmosphérique.

L'invention a également pour objet un dispositif de commande de frein caractérisé en ce qu'il est piloté par un servomoteur tel que défini précédemment.

L'invention sera mieux comprise à la lecture de la description qui va suivre, donnée uniquement à titre d'exemple et faite en se référant aux dessins dans lesquels :
- la figure 1 est une vue en coupe axiale d'un dispositif de commande de frein selon un premier mode de réalisation de l'invention, ce dispositif étant dans une configuration de repos ;
- la figure 2 est une vue en perspective, avec une coupe partielle, du support tubulaire des moyens formant vannes et de certains éléments voisins de ce support ;
- la figure 3 est une vue en perspective du support tubulaire isolé ;
- les figures 4 et 5 sont des vues similaires à celles de la figure 1, montrant le dispositif de commande de frein dans, respectivement, une configuration de freinage normal et une configuration de freinage d'urgence ;
- la figure 6 est une vue similaire à celle de la figure 1, montrant le dispositif de commande de frein dans une configuration d'interruption de freinage ;
- la figure 7 est une vue similaire à celle de la figure 5 d'un dispositif de commande de frein selon un second mode de réalisation de l'invention.

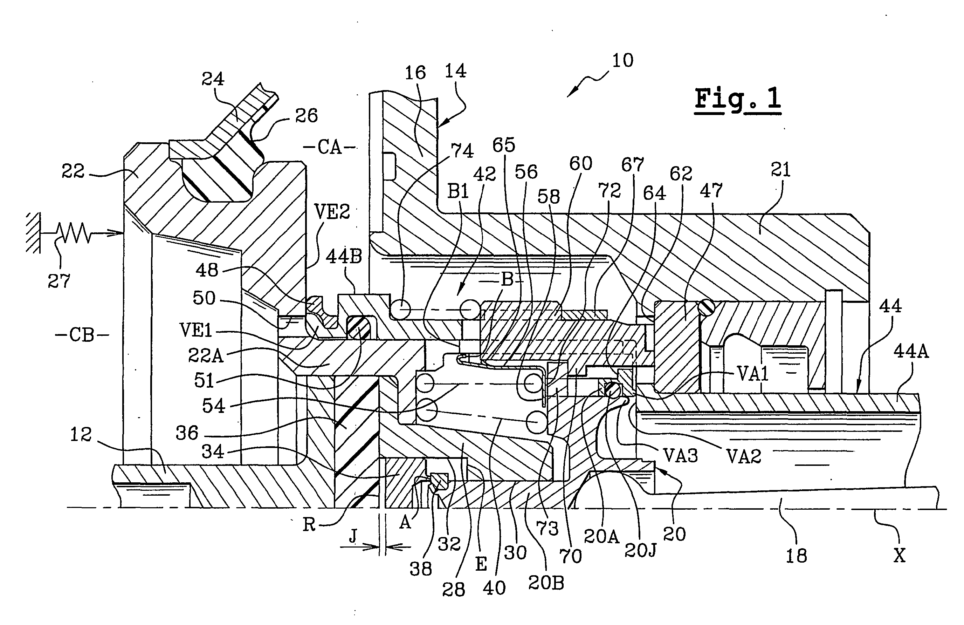

On a représenté sur les figures 1 à 6 un dispositif de commande de frein pour véhicule automobile, selon un premier mode de réalisation de l'invention, désigné par la référence générale 10.

Dans ce qui suit, un élément de la chaîne cinématique reliant le conducteur à un frein du véhicule sera dit « élément arrière » lorsqu'il est proche du conducteur dans cette chaîne cinématique et « élément avant » lorsqu'il est proche du frein dans cette chaîne cinématique.

Le dispositif 10 de commande de frein comprend une tige 12 d'actionnement d'un maître cylindre classique.

Le dispositif 10 de commande de frein comprend également un servomoteur 14 d'assistance pneumatique au freinage, destiné à piloter le maître cylindre, muni d'une enceinte 16 ayant une forme générale de révolution autour d'un axe X. Cet axe X définit une direction axiale.

L'enceinte 16, qui est logée généralement dans le compartiment moteur du véhicule automobile, est intercalée axialement entre le maître-cylindre et une tige de commande 18 reliée à une pédale classique de commande de frein, non représentée. La tige de commande 18 est liée axialement à un plongeur 20 formant un organe mobile de commande destiné à recevoir l'effort de commande appliqué sur la pédale de frein par l'utilisateur.

Le plongeur 20, de forme générale de révolution, comprend des première 20A et seconde 20B parties, sensiblement coaxiales, mobiles axialement l'une par rapport à l'autre de façon à permettre le réglage de la longueur de ce plongeur 20. La tige de commande 18 est liée axialement à la seconde partie 20B du plongeur 20. La première partie 20A du plongeur reçoit donc l'effort de commande appliqué par l'utilisateur par l'intermédiaire de la seconde partie 20B du plongeur.

La première partie 20A du plongeur est par exemple montée coulissante sur la seconde partie 20B du plongeur de façon à être guidée axialement par cette seconde partie. Un joint torique d'étanchéité 20J est intercalé radialement entre les deux parties 20A, 20B du plongeur.

De façon classique, l'enceinte 16 comprend une première chambre, dite chambre arrière CA, susceptible d'être reliée, par des moyens logés dans un prolongement tubulaire arrière 21 de l'enceinte 16, à une source de pression pneumatique, par exemple l'air atmosphérique comme dans le mode de réalisation illustré.

L'enceinte 16 comprend également une seconde chambre, dite chambre avant CB, séparée de la chambre arrière CA par un ensemble mobile comprenant un piston pneumatique 22 relié à une jupe rigide 24 et une membrane souple 26. La chambre avant CB est susceptible d'être reliée à une source de vide à l'aide de moyens de raccordement classiques. L'ensemble mobile sera appelé par la suite ensemble à piston 22.

L'ensemble à piston 22 est déplaçable suivant une direction sensiblement axiale en fonction des variations de pression dans au moins l'une des deux chambres CA, CB. Cette variation de pression est génératrice de la force d'assistance du servomoteur 14.

L'ensemble à piston 22 est solidaire axialement de la tige 12 d'actionnement du maître cylindre.

L'ensemble à piston 22 est rappelé élastiquement vers une position de repos, telle que représentée sur la figure 1, correspondant à un volume minimal de la chambre arrière CA, à l'aide de moyens classiques 27 schématisés sur la figure 1.

La seconde partie 20B du plongeur est guidée axialement au moyen d'un organe 28 solidaire axialement de la tige 12 d'actionnement du maître cylindre et de l'ensemble à piston 22. L'organe de guidage 28, de forme générale annulaire, comporte une surface interne de portée 30, coopérant avec le contour de la seconde partie 20B du plongeur pour la guider axialement, et un chambrage 32 formant un dégagement interne de l'organe de guidage 28.

Un palpeur 34, destiné à la transmission d'effort entre le plongeur 20 et la tige d'actionnement 12, est logé dans le chambrage 32. Ce palpeur 34, déplaçable axialement dans le chambrage 32, est intercalé axialement entre une face d'appui R, délimitant un disque de réaction 36, et un épaulement E de séparation de la surface de portée 30 et du chambrage 32.

Le disque de réaction 36, déformable élastiquement axialement, est intercalé axialement entre la tige 12 d'actionnement du maître cylindre et l'organe de guidage 28. Le disque de réaction 36 et sa face d'appui R sont liés axialement à la tige 12 et à l'ensemble à piston 22.

Le palpeur 34 est également intercalé axialement entre la face d'appui R délimitant le disque de réaction et une face d'appui A délimitant un anneau 38 lié axialement à la seconde partie 20B du plongeur. L'anneau d'appui 38, rapporté sur la seconde partie 20B du plongeur, est solidaire axialement de cette seconde partie 20B du plongeur.

Sur la figure 1, on a représenté le dispositif de commande 10, notamment le servomoteur 14, dans une configuration de repos. On notera que dans cette configuration de repos, il existe un jeu axial J entre la seconde partie 20B du plongeur et le disque de réaction 36. Plus particulièrement, le palpeur 34 étant en appui contre l'anneau 38, le jeu J s'étend axialement entre le palpeur 34 et le disque de réaction 36. L'anneau 38 est rapporté sur le plongeur 20. Un réglage précis du jeu J peut être obtenu par exemple par martelage de l'extrémité du palpeur 34.

Lorsque la pédale de frein est brusquement relâchée par l'utilisateur, l'anneau 38 forme une butée axiale de coopération avec l'épaulement E de l'organe de guidage 28 de façon à empêcher une séparation du plongeur 20 et du piston pneumatique 22.

Un ressort 40 travaillant en compression prend appui, d'une part, sur un siège solidaire du piston pneumatique 22 et, d'autre part, sur un siège solidaire de la seconde partie 20B du plongeur. Ce ressort 40 forme des moyens de rappel élastique sollicitant la seconde partie 20B du plongeur et le piston pneumatique 22 à l'écart l'un de l'autre, de façon notamment à rappeler le plongeur 20 vers une position de repos telle que représentée sur la figure 1.

Conformément à un fonctionnement classique du servomoteur 14, la chambre arrière CA est susceptible d'être mise en communication avec, sélectivement, d'une part, la chambre avant CB et, d'autre part, la source de pression pneumatique, à l'aide de moyens 42 formant des vannes pneumatiques.

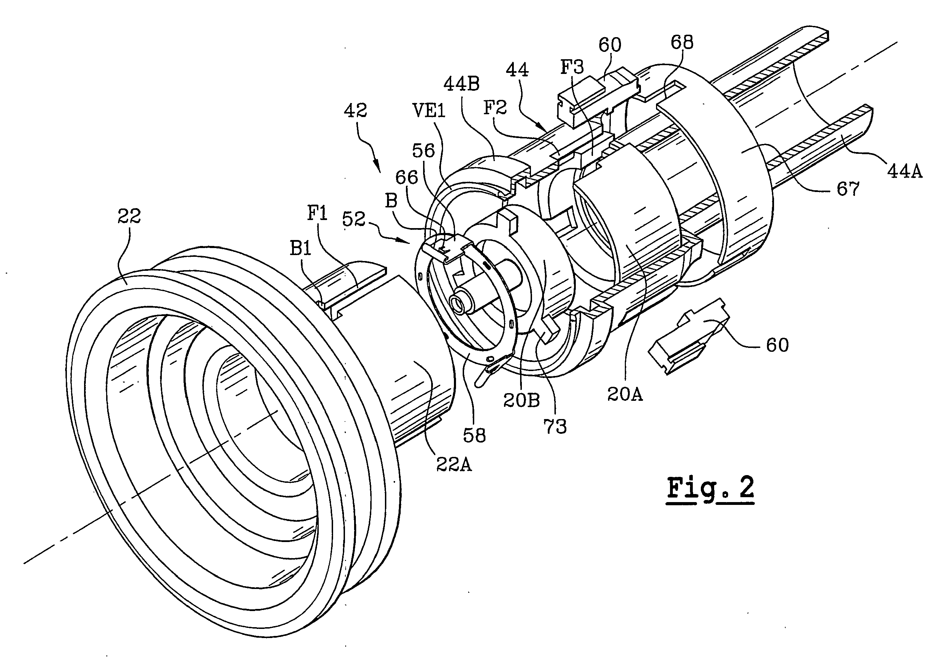

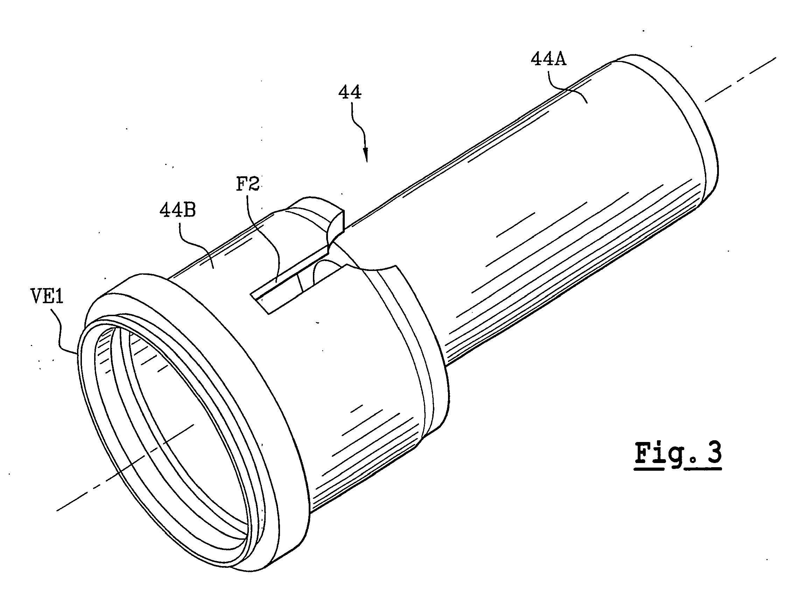

En se référant aux figures 1 et 2, on voit que les moyens 42 formant vannes comprennent un support tubulaire 44 monté flottant axialement dans le prolongement arrière 21 de l'enceinte 16. On notera que l'axe X forme un axe de révolution du support 44 coïncidant sensiblement avec l'axe de révolution du plongeur 20. La figure 3 représente le support 44 isolé du reste du dispositif de commande 10.

Les moyens 42 formant vannes comprennent également des premier VA1, deuxième VA2 et troisième VA3 éléments complémentaires formant une vanne de mise en communication de la chambre arrière CA avec la source de pression pneumatique. Ces éléments sont appelés premier VA1, deuxième VA2 et troisième VA3 éléments de vanne d'admission.

Le premier élément VA1 de vanne d'admission, complémentaire du deuxième élément VA2, est porté par la première partie 20A du plongeur. Le deuxième élément VA2 de vanne d'admission est porté par une extrémité arrière 44A du support, dite extrémité d'admission 44A. Le troisième élément VA3 de vanne d'admission, complémentaire du deuxième élément VA2, est porté par la seconde partie 20B du plongeur.

Le deuxième élément VA2 de vanne d'admission est destiné à coopérer avec le premier VA1 ou troisième VA3 élément de vanne d'admission selon la position axiale relative de deux parties 20A, 20B du plongeur.

On notera que l'extrémité d'admission 44A du support, logée dans le prolongement arrière 21 de l'enceinte 16, forme un conduit de raccordement de la chambre arrière CA à la source de pression, ceci lorsque la vanne d'admission formée par les éléments VA1, VA2, VA3 est ouverte.

Des moyens classiques 47 d'étanchéité et de guidage axial, de forme générale annulaire, sont intercalés radialement entre le contour interne du prolongement 21 de l'enceinte 16 et le contour externe de la partie d'admission 44A du support.

Les moyens 42 formant vannes comprennent encore des premier VE1 et second VE2 éléments complémentaires formant une vanne de mise en communication de la chambre arrière CA avec la chambre avant CB. Ces éléments sont appelés premier VE1 et second VE2 éléments de vanne d'équilibrage.

Le premier élément VE1 de vanne d'équilibrage est porté par une extrémité avant 44B du support, dite extrémité d'équilibrage 44B. Le second élément VE2 de vanne d'équilibrage est porté par le piston pneumatique 22.

Dans l'exemple illustré, le premier élément VE1 de vanne d'équilibrage porte un joint annulaire 48 destiné à coopérer avec le second élément VE2 de vanne d'équilibrage formant un siège d'appui pour le joint 48.

Le second élément VE2 de vanne d'équilibrage est muni d'un perçage 50 destiné à mettre en communication entre elles les chambres avant CA et arrière CB. Le perçage 50 est obturable par le premier élément VE1 de vanne d'équilibrage.

En variante, l'agencement du joint 48 et du siège sur les éléments de vanne d'équilibrage pourrait être inversé.

Le piston 22 comprend un prolongement annulaire arrière 22A formant des moyens de guidage axial de l'extrémité d'équilibrage 44B du support. Cette extrémité 44B est en effet emboîtée autour du prolongement 22A. Un joint torique d'étanchéité 51 est intercalé radialement entre le prolongement 22A et l'extrémité d'équilibrage 44B.

Les deux parties 20A, 20B du plongeur sont reliées entre elles par des moyens 52 de réglage de leur position axiale relative en fonction de la puissance de l'effort appliqué par l'utilisateur sur la seconde partie 20B du plongeur 20.

Ces moyens de réglage 52 comprennent des moyens libérables de verrouillage de la première partie 20A du plongeur avec le piston pneumatique 22 activés lorsque la distance entre cette première partie 20A du plongeur et le piston pneumatique 22 se réduit au delà d'un seuil prédéterminé.

Dans ce qui suit, la première partie 20A du plongeur et le piston pneumatique 22 seront désignés comme étant deux organes verrouillables mutuellement.

Les moyens de verrouillage comprennent un ressort 54, travaillant en compression, prenant appui, d'une part, sur un siège solidaire de la première partie 20A du support et, d'autre part, sur un siège solidaire du piston pneumatique 22. Ce ressort 54 forme des moyens de rappel élastique sollicitant la première partie 20A du plongeur et le piston pneumatique 22 à l'écart l'un de l'autre. Le ressort 54 sera appelé par la suite ressort de rappel de la première partie 20A du plongeur.

Les moyens de verrouillage comprennent au moins un bras 56, par exemple trois bras 56 répartis angulairement autour de l'axe X. Chaque bras 56 est solidaire axialement d'un des deux organes verrouillables, par exemple la première partie 20A du plongeur comme cela est représenté sur les figures.

Ainsi, dans l'exemple illustré sur les figures, chaque bras 56, de préférence métallique, comprend une extrémité libre, en forme de crochet, et une extrémité venue de matière avec un support annulaire métallique 58 formant une extrémité avant de la première partie 20A du plongeur. Le support annulaire 58 est fixé sur le reste de la première partie 20A, qui est de préférence en plastique, par fusion de bouterolles en plastique logées dans des orifices complémentaires du support 58.

L'extrémité libre des bras 56 forme un appui axial B destiné à coopérer avec un appui axial complémentaire B1 porté par l'autre des deux organes verrouillables, à savoir le piston 22 comme cela est représenté sur les figures. En effet, on voit notamment sur les figures 1 et 2 que l'appui B1 est ménagé dans le prolongement 22A du piston 22.

Les appuis B, B1 constituent des appuis axiaux complémentaires destinés à coopérer entre eux à l'encontre de la force de rappel du ressort 54. Chaque bras 56 est rappelé en position de coopération des appuis complémentaires B, B1 par déformation élastique de ce bras 56.

Les moyens de réglage 52 comprennent en outre une cale 60 associée à chaque bras 56. Les trois cales 60, réparties angulairement autour de l'axe X, sont montées coulissantes axialement sur le support 44.

Les trois cales 60 étant identiques, on n'en décrira ci-dessous qu'une seule.

Selon la position axiale relative de la cale 60 dans l'enceinte 16, la course vers l'arrière de cette cale 60 est limitée :
- soit par une butée fixe de repos 62, solidaire axialement du prolongement arrière 21 de l'enceinte,
- soit, relativement à la première partie 20A du plongeur, par une butée arrière 64 ménagée sur cette première partie 20A du plongeur.

La butée fixe de repos 62 détermine une position de repos de la cale 60.

La cale 60 est destinée à coopérer avec un bras 56 correspondant de façon à libérer les appuis axiaux complémentaire B, B1 en s'opposant à la force élastique de rappel du bras 56 en position de coopération de ces appuis B, B1.

A cet effet, une came de libération 65 est ménagée sur la cale 60. La came de libération 65 est destinée à coopérer avec une partie complémentaire du bras 56, par exemple, une patte 66 formée par un crevé ménagé dans ce bras, lorsque cette cale 60 est en appui sur la butée fixe de repos 62 (voir notamment figures 1, 2 et 4).

Les trois cales 60 sont reliées entre elles, par exemple par une bague de liaison 67 montée coulissante sur le support 44.

Chaque cale 60 est fixée sur la bague 67 par exemple par emboîtement dans une encoche axiale 68 de cette bague 67 (voir notamment figure 2).

La course de la seconde partie 20B du plongeur est limitée :
- vers l'arrière et relativement à chaque cale 60, par une butée arrière 70 ménagée sur chaque cale 60, et
- vers l'avant et relativement à la première partie 20A du plongeur, par une butée avant 72 ménagée sur cette première partie 20A du plongeur. La butée avant 72 est formée, par exemple, par une face du support annulaire 58.

On notera que les butées arrière 70 et avant 72 sont destinées à coopérer avec des doigts radiaux 73 de la seconde partie 20B du plongeur (voir notamment figures 1 et 2).

Un ressort 74, travaillant en compression, prend appui, d'une part, sur un siège solidaire de l'extrémité d'équilibrage 44B du support et, d'autre part, sur un siège ménagé sur chaque cale 60. Ce ressort 74 forme des moyens de rappel élastique sollicitant le support 44 et chaque cale 60 à l'écart l'un de l'autre, de façon notamment à rappeler le support 44 vers le piston 22 et ainsi lier élastiquement ce support 44 à des déplacements du piston 22.

On notera que des fentes axiales F1, F2, F3 ménagées respectivement dans le prolongement arrière 22A du piston, l'extrémité d'équilibrage 44B du support et la première partie 20A du plongeur participent au guidage axial des cales 60 et des doigts radiaux 73 de la seconde partie 20B du plongeur. Les appuis axiaux B1 sont délimités par des épaulements des fentes F1 ménagées dans le prolongement 22A du piston. Chaque appui B1 sépare deux parties respectivement étroite et large de la fente F1 correspondante. La partie étroite de la fente F1 retient l'extrémité libre (appui B) du bras 56 correspondant à l'écart radialement de l'appui B1. La partie large de la fente F1 autorise le positionnement de l'extrémité libre du bras 56 (appui B) au même niveau radialement que l'appui B1.

On précisera ci-dessous les principaux aspects du fonctionnement du dispositif 10 de commande de frein liés à l'invention.

Au repos, le dispositif 10 de commande de frein est dans la configuration représentée sur la figure 1. La seconde partie 20B du plongeur est en appui contre une paroi arrière de l'enceinte 16 par l'intermédiaire des cales 60. En effet, la seconde partie 20B du plongeur est en appui contre la butée arrière 70 de chaque cale 60, cette dernière étant en appui contre la butée fixe de repos 62. Les moyens 27 de rappel de l'ensemble à piston 22 dans sa position de repos sollicitent le piston 22 en appui contre le support 44, ce dernier coopérant, comme chaque cale 60, avec la butée fixe de repos 62. Les premiers VE1 et second VE2 éléments de vanne d'équilibrage coopèrent entre eux. Cette vanne d'équilibrage est donc fermée.

Le ressort 54 sollicite la première partie 20A du plongeur de façon que les premiers VA1 et deuxième VA2 éléments de vanne d'admission coopèrent entre eux. Cette vanne d'admission est donc fermée.

Le troisième élément VA3 de vanne d'admission est maintenu à l'écart du deuxième élément VA2 de vanne d'admission par coopération de la seconde partie 20B du plongeur avec les cales 60.

On notera la présence d'un jeu axial entre la seconde partie 20B du plongeur et la butée avant 72 de la première partie 20A de ce plongeur de façon à éviter un positionnement hyperstatique du support 44.

Les extrémités libres des bras 56, plus particulièrement les appuis B de ces bras, sont maintenues à l'écart des appuis B1 par coopération de la came de libération 65 de chaque cale 60 avec la patte 66 du bras 56 correspondant.

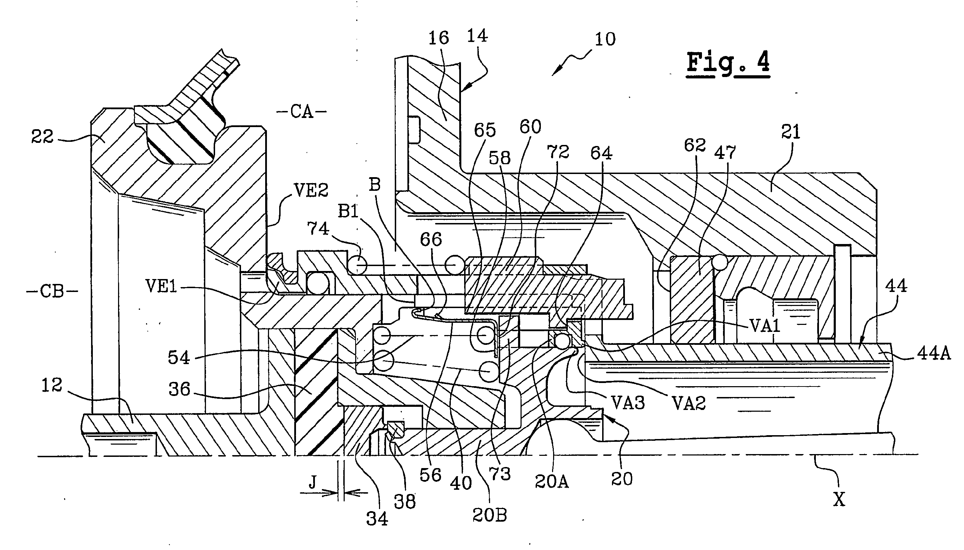

Sur la figure 4, on a représenté le dispositif de commande 10 dans une configuration telle que le plongeur 20 est en équilibre au cours d'une opération de freinage normal.

Par rapport à la configuration de la figure 1, le support 44 s'est déplacé, conjointement avec l'ensemble à piston 22, vers l'avant. Le ressort 74 sollicite chaque cale 60 en appui contre la butée arrière 64 de la première partie 20A du plongeur. La seconde partie 20B du plongeur est en appui contre la butée avant 72 de la première partie 20A du plongeur.

La position relative des trois éléments VA1, VA2, VA3 de vanne d'admission n'est pas modifiée par rapport à la configuration représentée sur la figure 1. De même, la position relative des éléments VE1, VE2 de vanne d'équilibrage n'est pas modifiée par rapport à la configuration représentée sur la figure 1.

L'opération de freinage se déroulant dans les conditions normales, la distance entre la première partie 20A du plongeur et l'ensemble à piston 22 ne se réduit pas au cours du freinage au-delà du seuil prédéterminé si bien qu'il n'y a pas de verrouillage des appuis B des bras 56 avec les appuis B1 de l'ensemble à piston 22.

La position relative des deux parties 20A, 20B du plongeur correspond à un jeu axial J susceptible de provoquer un saut de pression normal dans le maître cylindre lorsque l'utilisateur rompt l'équilibre du plongeur 20 en augmentant la puissance de la force appliquée sur la pédale de frein.

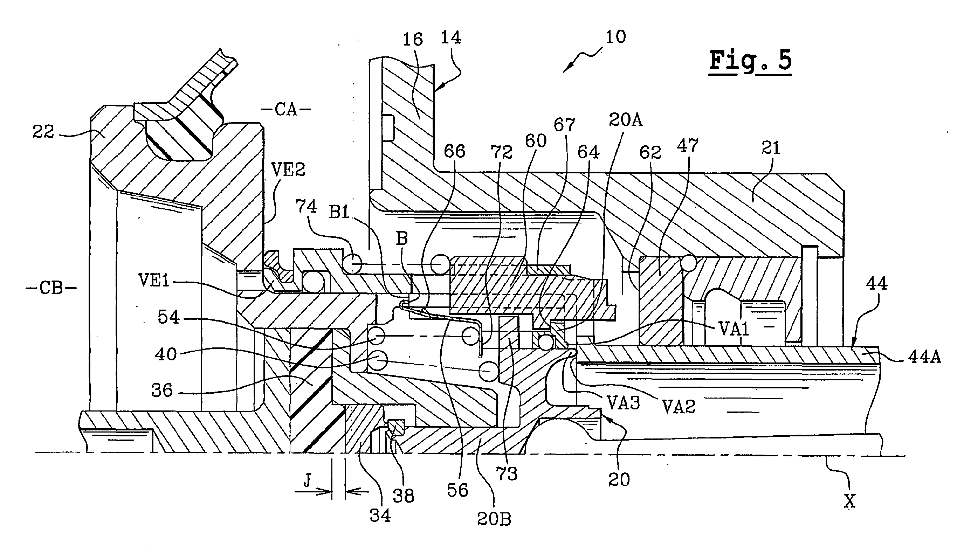

Sur la figure 5, on a représenté le dispositif de commande 10 dans une configuration telle que le plongeur 20 est dans une position d'équilibre au cours d'une opération de freinage d'urgence.

Compte-tenu de l'inertie de l'ensemble de l'ensemble à piston 22, le freinage d'urgence (effort important appliqué sur la pédale de frein) provoque un rapprochement relatif entre la première partie 20A du plongeur et l'ensemble à piston 22 suffisamment important pour que la distance entre cette première partie 20A du plongeur et l'ensemble à piston 22 se réduise au-delà du seuil prédéterminé. Ceci provoque le rappel automatique des appuis B portés par les bras 56 au niveau radialement des appuis B1 portés par le prolongement arrière 22A du piston. De ce fait, dans la configuration d'équilibre du plongeur 20 représentée sur la figure 5, les appuis B coopèrent, à l'encontre de la force de rappel du ressort 74, avec les appuis B1 de façon à maintenir écartés l'un de l'autre les premier VA1 et deuxième VA2 éléments de vanne d'admission.

Le troisième élément VA3 de vanne d'admission coopère alors avec le deuxième élément VA2 de vanne d'admission de façon à fermer cette vanne d'admission. Cette positon relative des deuxième VA2 et troisième VA3 éléments de vanne d'admission impose un jeu axial J supérieur au jeu obtenu dans les conditions de freinage normal décries précédemment. Ce jeu J supérieur permet, lorsque l'utilisateur rompt l'équilibre du plongeur 20 en augmentant la puissance de la force appliquée sur la pédale de frein, d'obtenir un saut de pression dans le maître cylindre supérieur à celui évoqué précédemment dans le cas du freinage normal.

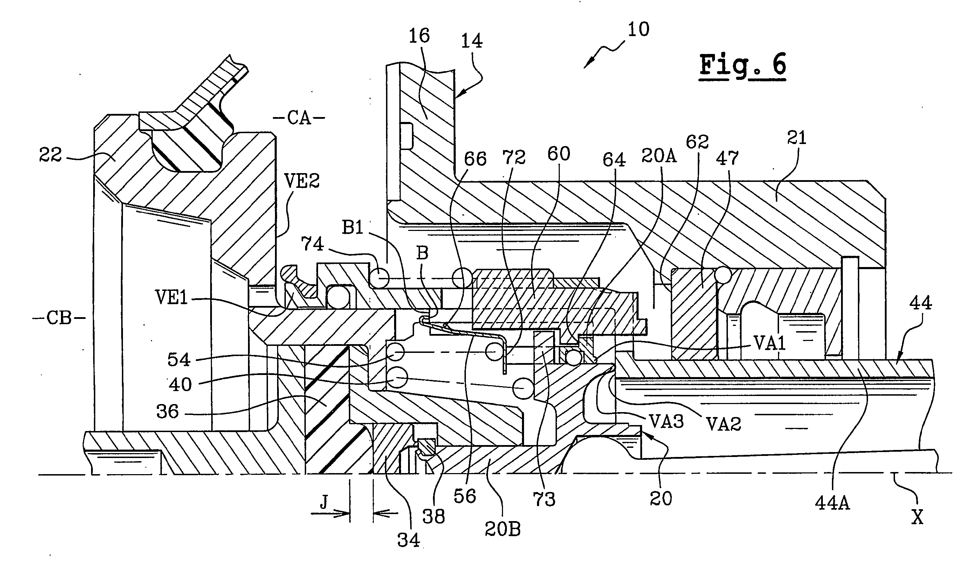

Sur la figure 6, on a représenté le dispositif de commande 10 dans une configuration correspondant à une interruption de l'opération de freinage (l'utilisateur relâche la pédale de frein).

Par rapport à la configuration représentée sur la figure 5, le support 44 se déplace vers l'arrière de façon à ouvrir la vanne d'équilibrage (les éléments VE1, VE2 de vanne d'équilibrage s'écartent l'un de l'autre). Les chambres CA, CB communiquent entre elles. Le premier élément VA1 de vanne d'admission est toujours maintenu à l'écart du deuxième élément VA2 de vanne d'admission par la coopération des appuis axiaux B, B1. Le troisième élément VA3 de vanne d'admission coopère toujours avec le deuxième élément VA2 de vanne d'admission.

Le support 44, poursuivant son déplacement vers l'arrière, atteint la position de repos représentée sur la figure 1 dans laquelle chaque cale 60 est en appui contre la butée de repos 62. Dans cette position, les cames 65 des cales 60 coopèrent avec les bras 56 de façon à libérer les appuis axiaux B, B1.

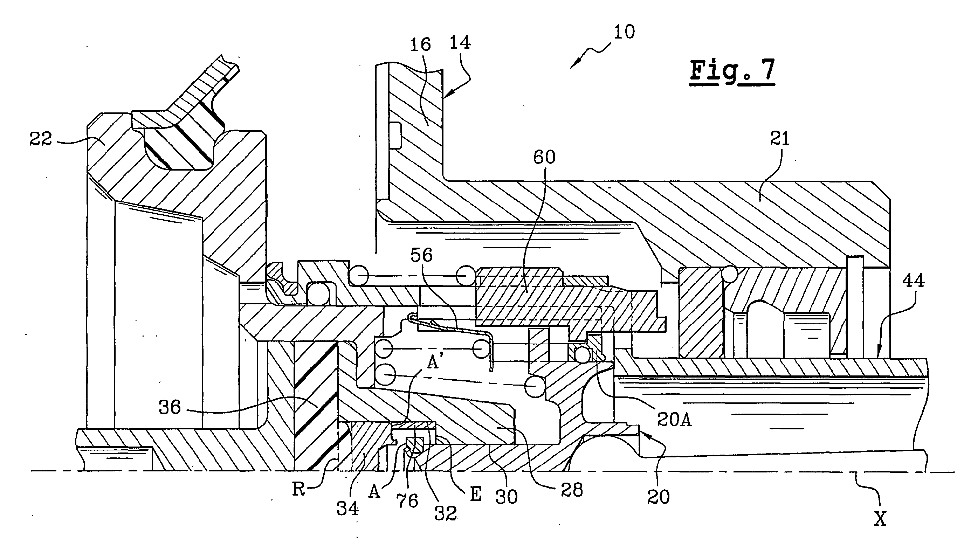

Sur la figure 7, on a représenté un dispositif 10 de commande de frein selon un second mode de réalisation de l'invention. Sur cette figure, les éléments analogues à ceux des figures précédentes, sont désignés par des références identiques.

Dans ce cas, le palpeur 34 est intercalé axialement entre la face d'appui R délimitant le disque de réaction 36 et une face d'appui A' délimitant une extrémité d'une bague d'entretoisement 76 logée dans le chambrage 32. La bague d'entretoisement 76 est intercalée axialement entre le palpeur 34 et l'épaulement E de séparation de la surface de portée 30 et du chambrage 32. On notera que l'anneau 38 est logé à l'intérieur de la bague 76.

La bague d'entretoisement 76 permet dans certains cas, alors que cette bague 76 est liée axialement à la tige d'actionnement 12, de renvoyer la réaction subie par la tige d'actionnement 12 vers l'ensemble à piston 22 plutôt que vers le plongeur 20. En effet, le palpeur 34 prend appui sur cette bague d'entretoisement 76 plutôt que sur l'anneau d'appui 38 dans certaines configurations de fonctionnement du dispositif de commande 10.

Le fonctionnement du dispositif de commande 10 selon le second mode de réalisation de l'invention est analogue, mutatis mutandis, au fonctionnement du dispositif 10 selon le premier mode de réalisation de l'invention.

Parmi les avantages de l'invention, on notera que celle-ci permet, grâce au réglage automatique de la position axiale relative des deux parties 20A, 20B du plongeur 20, d'assurer un saut de pression dans le maître-cylindre plus élevé dans le cas d'un freinage urgent que dans le cas d'un freinage normal.

## Revendications

1. Servomoteur (14) d'assistance pneumatique au freinage, du type comprenant :
- un organe (20) de commande de ce servomoteur, mobile axialement, destiné à recevoir un effort de commande appliqué par un utilisateur,
- une enceinte pneumatique (16) comportant deux chambres dites arrière (CA) et avant (CB) séparées par un piston pneumatique (22), et
- des moyens (42) formant vannes pneumatiques comprenant :
■ des premier (VE1) et second (VE2) éléments complémentaires formant vanne de mise en communication de la chambre arrière (CA) avec la chambre avant (CB), dits premier (VE1) et second (VE2) éléments de vanne d'équilibrage, et
■ des premier (VA1) et deuxième (VA2) éléments complémentaires formant vanne de mise en communication de la chambre arrière (CA) avec une source de pression pneumatique, dits premier (VA1) et deuxième (VA2) éléments de vanne d'admission,
**caractérisé**
**en ce que** l'organe de commande (20) comprend des première (20A) et seconde (20B) parties, mobiles axialement l'une par rapport à l'autre, la première partie (20A) de l'organe de commande (20) recevant l'effort de commande appliqué par l'utilisateur par l'intermédiaire de la seconde partie (20B) de l'organe de commande (20),
**en ce que** les moyens (42) formant vannes comprennent un support tubulaire (44), monté flottant axialement dans l'enceinte pneumatique (16),
**en ce que** les premier (VE1) et second (VE2) éléments de vanne d'équilibrage sont portés respectivement par une extrémité d'équilibrage (44B) du support tubulaire (44) et le piston pneumatique (22),
**en ce que** les premier (VA1) et deuxième (VA2) éléments de vanne d'admission sont portés respectivement par la première partie (20A) de l'organe de commande (20) et une extrémité d'admission (44A) du support tubulaire (44),
**en ce que** les deux parties (20A, 20B) de l'organe de commande (20) sont reliées entre elles par des moyens (52) de réglage de leur position axiale relative en fonction de la puissance de l'effort appliqué à l'organe de commande (20), et
**en ce qu'**un troisième élément (VA3) de vanne d'admission, complémentaire du deuxième élément (VA2) de vanne d'admission est porté par la seconde partie (20B) de l'organe de commande (20), le deuxième élément (VA2) de vanne d'admission étant destiné à coopérer avec le premier (VA1) ou troisième (VA3) élément de vanne d'admission selon la position axiale relative de deux parties (20A, 20B) de l'organe de commande (20).

2. Servomoteur selon la revendication 1, **caractérisé en ce que** les moyens (52) de réglage de la position axiale relative des deux parties (20A, 20B) de l'organe de commande (20) comprennent des moyens libérables de verrouillage de la première partie (20A) de l'organe de commande (20) avec le piston pneumatique (22) activés lorsque la distance entre cette première partie (20A) de l'organe de commande (20) et le piston pneumatique (22) se réduit au delà d'un seuil prédéterminé, le piston pneumatique (22) et la première partie (20A) de l'organe de commande (20) formant deux organes verrouillables mutuellement.

3. Servomoteur selon la revendication 2, **caractérisé en ce que** les moyens de verrouillage comprennent :
- des moyens (54) de rappel élastique sollicitant le piston pneumatique (22) et la première partie (20A) de l'organe de commande (20) à l'écart l'un de l'autre, dits moyens (54) de rappel de la première partie (20A) de l'organe de commande (20),
- des appuis axiaux complémentaires (B, B1) portés par l'un (22) des deux organes verrouillables et une extrémité libre d'au moins un bras (56) solitaire axialement de l'autre (20A) des deux organes verrouillables, ces appuis axiaux (B, B1) coopérant entre eux à l'encontre des moyens (54) de rappel de la première partie (20A) de l'organe de commande (20), et
- des moyens (65) de libération des appuis axiaux complémentaires (B, B1) coopérant avec le bras (56) à l'encontre d'une force élastique de rappel de ce bras (56) en position de coopération des appuis complémentaires (B, B1).

4. Servomoteur selon la revendication 2 ou 3, **caractérisé en ce que** les moyens (52) de réglage.de la position axiale relative des deux parties (20A, 20B) de l'organe de commande (20) comprennent au moins une cale (60), montée coulissante axialement sur le support (44), et
**en ce que**, selon la position axiale relative de la cale (60) dans l'enceinte, la course vers l'arrière de cette cale (60) est limitée :
- soit par une butée fixe de repos (62), déterminant une position de repos de la cale (60),
- soit, relativement à la première partie (20A) de l'organe de commande (20), par une butée arrière (64) ménagée sur cette première partie (20A) de l'organe de commande (20).

5. Servomoteur selon les revendications 3 et 4 prises ensemble, **caractérisé en ce que** les moyens de libération des appuis axiaux complémentaires comprennent une came de libération (65) ménagée sur la cale (60), destinée à coopérer avec une partie complémentaire (66) du bras lorsque cette cale (60) est en appui sur la butée fixe de repos (62).

6. Servomoteur selon la revendication 4 ou 5, **caractérisé en ce que** la course de la seconde partie (20B) de l'organe de commande (20) est limitée :
- vers l'arrière et relativement à la cale (60), par une butée arrière (70) ménagée sur cette cale (60),
- vers l'avant et relativement à la première partie (20A) de l'organe de commande (20), par une butée avant (72) ménagée sur cette première partie (20A) de l'organe de commande (20).

7. Servomoteur selon l'une quelconque des revendications 4 à 6, **caractérisé en ce que** l'organe de commande (20) a une forme générale de révolution d'axe (X) coïncidant sensiblement avec celui du support (44), les moyens (52) de réglage de la position axiale relative des deux parties (20A, 20B) de l'organe de commande (20) comprenant au moins trois cales (60) et trois bras (56) répartis angulairement autour de l'axe de révolution (X) de l'organe de commande (20).

8. Servomoteur selon la revendication 7, **caractérisé en ce que** les cales (60) sont reliées entre elles par une bague de liaison (67) montée coulissante sur le support (44).

9. Servomoteur selon l'une quelconque des revendications 4 à 8, **caractérisé en ce qu'**il comprend des moyens (74) de rappel élastique sollicitant chaque cale (60) et le support (44) à l'écart l'un de l'autre, de façon notamment à rappeler le support (44) vers le piston (22) et ainsi lier élastiquement ce support (44) à des déplacements du piston (22).

10. Servomoteur selon l'une quelconque des revendications 3 à 9, **caractérisé en ce que** chaque bras (56), de préférence métallique, est rappelé en position de coopération des appuis complémentaires (B, B1) par déformation élastique de ce bras (56).

11. Servomoteur selon l'une quelconque des revendications 3 à 10, **caractérisé en ce que** chaque bras (56) est solidaire axialement de la première partie (20A) de l'organe de commande (20).

12. Servomoteur selon la revendication 11, **caractérisé en ce que** chaque bras (56) est venu de matière avec un support annulaire métallique (58) formant une extrémité avant de la première partie (20A) de l'organe de commande (20).

13. Servomoteur selon l'une quelconque des revendications précédentes, **caractérisé en ce qu'**il comprend des moyens (40) de rappel élastique sollicitant la seconde partie (20B) de l'organe de commande (20) et le piston pneumatique (22) à l'écart l'un de l'autre.

14. Servomoteur selon l'une quelconque des revendications précédentes, **caractérisé en ce qu'**il comprend un palpeur (34) destiné à la transmission d'effort entre l'organe de commande (20) et une tige (12) d'actionnement d'un maître cylindre, ce palpeur (34) étant intercalé axialement, d'une part, entre des première (R) et seconde (A') faces d'appui destinées à être liées axialement à la tige (12) d'actionnement, et d'autre part, entre la première face d'appui (R) destinée à être liée à la tige d'actionnement (12) et une face d'appui (A) liée axialement à l'organe de commande (20).

15. Servomoteur selon la revendication 14, **caractérisé en ce que** la première face d'appui (R) destinée à être liée à la tige d'actionnement (12) délimite un disque de réaction (36), déformable élastiquement axialement, destinée à être lié axialement à la tige d'actionnement (12).

16. Servomoteur selon la revendication 14 ou 15, **caractérisé en ce que** la seconde face d'appui (A') destinée à être liée à la tige d'actionnement (12) délimite une extrémité d'une bague d'entretoisement (66) portée par un organe (28) de guidage axial de l'organe de commande (20), la face d'appui (A) liée axialement à l'organe de commande (20) délimitant un anneau d'appui (38) logé dans la bague d'appui (66).

17. Servomoteur selon l'une quelconque des revendications précédentes, **caractérisé en ce que** la source de pression pneumatique est l'air atmosphérique.

18. Dispositif de commande de frein **caractérisé en ce qu'**il est piloté par un servomoteur selon l'une quelconque des revendications précédentes.

## Claims

1. Pneumatic brake booster (14), of the type comprising:
- an axially movable control member (20) for controlling this booster and intended to receive a control force applied by a user,
- a pneumatic enclosure (16) containing two chambers, called a rear chamber (CA) and a front chamber (CB), separated by a pneumatic piston (22), and
- means (42) forming pneumatic valves comprising:
• first (VE1) and second (VE2) complementary valve-forming elements for placing the rear chamber (CA) in communication with the front chamber (CB), called first (VE1) and second (VE2) balancing valve elements, and
• first (VA1) and second (VA2) complementary valve-forming elements for placing the rear chamber (CA) in communication with a pneumatic pressure source, called first (VA1) and second (VA2) intake valve elements,
**characterized**
**in that** the control member (20) comprises first (20A) and second (20B) parts which can move axially with respect to one another, the first part (20A) of the control member (20) receiving the control force applied by the user by way of the second part (20B) of the control member (20),
**in that** the valve-forming means (42) comprise a tubular support (44) mounted in an axially floating manner in the pneumatic enclosure (16),
**in that** the first (VE1) and second (VE2) balancing valve elements are borne respectively by a balancing end (44B) of the tubular support and the pneumatic piston (22),
**in that** the first (VA1) and second (VA2) intake valve elements are borne respectively by the first part (20A) of the control member (20) and an intake end (44A) of the tubular support,
**in that** the two parts (20A, 20B) of the control member (20) are connected to one another by means (52) for adjusting their relative axial position as a function of the power of the force applied to the control member (20), and
**in that** a third intake valve element (VA3), complementary with the second intake valve element (VA2), is borne by the second part (20B) of the control member (20), the second intake valve element (VA2) being intended to engage with the first (VA1) or third (VA3) intake valve element depending on the relative axial position of two parts (20A, 20B) of the control member (20).

2. Booster according to claim 1, **characterized in that** the means (52) for adjusting the relative axial position of the two parts (20A, 20B) of the control member (20) comprise releasable locking means for locking the first part (20A) of the control member (20) with the pneumatic piston (22) which are activated when the distance between this first part (20A) of the control member (20) and the pneumatic piston (22) is reduced beyond a predetermined threshold, the pneumatic piston (22) and the first part (20A) of the control member (20) forming two mutually lockable members.

3. Booster according to claim 2, **characterized in that** the locking means comprise:
- elastic return means (54) urging the pneumatic piston (22) and the first part (20A) of the control member (20) away from one another, called means (54) for returning the first part (20A) of the control member (20),
- complementary axial bearing surfaces (B, B1) borne by one (22) of the two lockable members and a free end of at least one arm (56) secured axially to the other (20A) of the two lockable members, these axial bearing surfaces (B, B1) engaging with one another against the means (54) for returning the first part (20A) of the control member (20), and
- means (65) for releasing the complementary axial bearing surfaces (B, B1) engaging with the arm (56) against an elastic force returning this arm (56) into a position of engagement of the complementary bearing surfaces (B, B1).

4. Booster according to claim 2 or 3, **characterized in that** the means (52) for adjusting the relative axial position of the two parts (20A, 20B) of the control member (20) comprise at least one key (60) mounted so that it can slide axially on the support (44), and **in that**, depending on the relative axial position of the key (60) in the enclosure, the travel toward the rear of this key (60) is limited:
- either by a fixed rest stop (62), determining a rest position for the key (60),
- or, relative to the first part (20A) of the control member (20), by a rear stop (64) formed on this first part (20A) of the control member (20).

5. Booster according to claims 3 and 4 taken together, **characterized in that** the means for releasing the complementary axial bearing surfaces comprise a release cam (65) formed on the key (60) and intended to engage with a complementary part (66) of the arm when this key (60) bears on the fixed rest stop (62).

6. Booster according to claim 4 or 5, **characterized in that** the travel of the second part (20B) of the control member (20) is limited:
- toward the rear and relative to the key (60), by a rear stop (70) formed on this key (60),
- toward the front and relative to the first part (20A) of the control member (20), by a front stop (72) formed on this first part (20A) of the control member (20).

7. Booster according to any one of claims 4 to 6, **characterized in that** the control member (20) has a general shape of revolution of axis (X) coinciding substantially with the axis of the support (44), the means (52) for adjusting the relative axial position of the two parts (20A, 20B) of the control member (20) comprising at least three keys (60) and three arms (56) distributed angularly about the axis of revolution (X) of the control member (20).

8. Booster according to claim 7, **characterized in that** the keys (60) are connected to one another by a connecting sleeve (67) mounted slideably on the support (44).

9. Booster according to any one of claims 4 to 8, **characterized in that** it comprises elastic return means (74) urging each key (60) and the support (44) away from one another, in such a way in particular as to return the support (44) toward the piston (22) and thus connect this support (44) elastically to movements of the piston (22).

10. Booster according to any one of claims 3 to 9, **characterized in that** each arm (56), which is preferably made of metal, is returned to a position of engagement of the complementary bearing surfaces (B, B1) by elastic deformation of this arm (56).

11. Booster according to any one of claims 3 to 10, **characterized in that** each arm (56) is secured axially to the first part (20A) of the control member (20).

12. Booster according to claim 11, **characterized in that** each arm (56) is made in one piece with a metal annular support (58) forming a front end of the first part (20A) of the control member (20).

13. Booster according to any one of the preceding claims, **characterized in that** it comprises elastic return means (40) urging the second part (20B) of the control member (20) and the pneumatic piston (22) away from one another.

14. Booster according to any one of the preceding claims, **characterized in that** it comprises a feeler (34) intended for the transmission of force between the control member (20) and a master cylinder actuating rod (12), this feeler (34) being inserted axially, on the one hand, between first (R) and second (A') bearing faces intended to be connected axially to the actuating rod (12), and, on the other hand, between the first bearing face (R) intended to be connected to the actuating rod (12) and a bearing face (A) connected axially to the control member (20).

15. Booster according to claim 14, **characterized in that** the first bearing face (R) intended to be connected to the actuating rod (12) delimits a reaction disk (36) which is elastically deformable axially and intended to be connected axially to the actuating rod (12).

16. Booster according to claim 14 or 15, **characterized in that** the second bearing face (A') intended to be connected to the actuating rod (12) delimits one end of a spacer sleeve (66) borne by a member (28) for axially guiding the control member (20), the bearing face (A) connected axially to the control member (20) delimiting a bearing ring (38) housed within the bearing sleeve (66).

17. Booster according to any one of the preceding claims, **characterized in that** the pneumatic pressure source is atmospheric air.

18. Brake control device, **characterized in that** it is driven by a booster according to any one of the preceding claims.

## Patentansprüche

1. Pneumatischer Servomotor (14) zur Bremsunterstützung, vom Typ mit:
- einem Organ (20) zur Steuerung dieses Servomotors, das axial beweglich und dazu vorgesehen ist, eine von einem Benutzer aufgebrachte Steuerungskraft aufzunehmen,
- einem pneumatischen Raum (16) mit zwei Kammern, einer sogenannten hinteren Kammer (CA) und einer sogenannten vorderen Kammer (CB), die durch einen pneumatischen Kolben (22) getrennt sind, und
- Mitteln (42), die pneumatische Ventile bilden, mit:
■ einem ersten komplementären Element (VE1) und einem zweiten komplementären Element (VE2), die ein Ventil zur Verbindung der hinteren Kammer (CA) mit der vorderen Kammer (CB) bilden und erstes Ausgleichsventilelement (VE1) und zweites Ausgleichsventilelement (VE2) genannt werden, und
■ einem ersten komplementären Element (VA1) und einem zweiten komplementären Element (VA2), die ein Ventil zur Verbindung der hinteren Kammer (CA) mit einer pneumatischen Druckquelle bilden und erstes Einlassventilelement (VA1) und zweites Einlassventilelement (VA2) genannt werden,
**dadurch gekennzeichnet, dass**
das Steuerorgan (20) einen ersten Abschnitt (20A) und einen zweiten Abschnitt (20B) aufweist, die axial zueinander beweglich sind, wobei der erste Abschnitt (20A) des Steuerorgans (20) über den zweiten Abschnitt (20B) des Steuerorgans (20) die vom Benutzer aufgebrachte Steuerungskraft aufnimmt,
die Ventile bildenden Mittel (42) einen rohrförmigen Halter (44) aufweisen, der im pneumatischen Raum (16) axial schwimmend angebracht ist,
das erste Ausgleichsventilelement (VE1) und das zweite Ausgleichsventilelement (VE2) von einem Ausgleichsende (44B) des rohrförmigen Halters (44) bzw. vom pneumatischen Kolben (22) getragen sind,
das erste Einlassventilelement (VA1) und das zweite Einlassventilelement (VA2) vom ersten Abschnitt (20A) des Steuerorgans (20) bzw. von einem Einlassende (44A) des rohrförmigen Halters (44) getragen sind,
die beiden Abschnitte (20A, 20B) des Steuerorgans (20) über Mittel (52) zum Einstellen ihrer relativen axialen Stellung in Abhängigkeit von der Stärke der auf das Steuerorgan (20) aufgebrachten Kraft miteinander verbunden sind, und
ein drittes Einlassventilelement (VA3), das zum zweiten Einlassventilelement (VA2) komplementär ist, vom zweiten Abschnitt (20B) des Steuerorgans (20) getragen ist, wobei das zweite Einlassventilelement (VA2) dazu vorgesehen ist, in Abhängigkeit von der relativen axialen Stellung der beiden Abschnitte (20A, 20B) des Steuerorgans (20) mit dem ersten (VA1) oder dem dritten Einlassventilelement (VA3) zusammenzuwirken.

2. Servomotor nach Anspruch 1, **dadurch gekennzeichnet, dass** die Mittel (52) zum Einstellen der relativen axialen Stellung der beiden Abschnitte (20A, 20B) des Steuerorgans (20) lösbare Mittel zur Verriegelung des ersten Abschnitts (20A) des Steuerorgans (20) mit dem pneumatischen Kolben (22) umfassen, die betätigt werden, wenn der Abstand zwischen diesem ersten Abschnitt (20A) des Steuerorgans (20) und dem pneumatischen Kolben (22) sich jenseits eines vorbestimmten Schwellenwerts verringert, wobei der pneumatische Kolben (22) und der erste Abschnitt (20A) des Steuerorgans (20) zwei Organe bilden, die sich gegenseitig verriegeln können.

3. Servomotor nach Anspruch 2, **dadurch gekennzeichnet, dass** die Verriegelungsmittel Folgendes aufweisen:
- Mittel (54) zum elastischen Zurückstellen, die den pneumatischen Kolben (22) und den ersten Abschnitt (20A) des Steuerorgans (20) voneinander weg beaufschlagen und Mittel (54) zum Zurückstellen des ersten Abschnitts (20A) des Steuerorgans (20) genannt werden,
- komplementäre axiale Abstützungen (B, B1), die von einem (22) der beiden verriegelbaren Organe und einem freien Ende mindestens eines Arms (56) getragen sind, welcher axial fest mit dem anderen (20A) der beiden verriegelbaren Organe verbunden ist, wobei diese axialen Abstützungen (B, B1) gegen die Mittel (54) zum Zurückstellen des ersten Abschnitts (20A) des Steuerorgans (20) zusammenwirken, und
- Mittel (65) zum Freigeben der komplementären axialen Abstützungen (B, B1), die mit dem Arm (56) gegen eine elastische Kraft zum Zurückstellen dieses Arms (56) in eine Stellung zusammenwirken, in der die komplementären Abstützungen (B, B1) zusammenwirken.

4. Servomotor nach Anspruch 2 oder 3, **dadurch gekennzeichnet, dass**
die Mittel (52) zum Einstellen der relativen axialen Stellung der beiden Abschnitte (20A, 20B) des Steuerorgans (20) mindestens einen Keil (60) aufweisen, der axial gleitend am Halter (44) angebracht ist, und
in Abhängigkeit von der relativen axialen Stellung des Keils (60) im Raum der Weg zum hinteren Teil dieses Keils (60) begrenzt ist:
- entweder durch einen festen Ruheanschlag (62), der eine Ruhestellung des Keils (60) vorbestimmt,
- oder, in Bezug auf den ersten Abschnitt (20A) des Steuerorgans (20), durch einen hinteren Anschlag (64), der an diesem ersten Abschnitt (20A) des Steuerorgans (20) ausgebildet ist.

5. Servomotor nach den Ansprüchen 3 und 4 in Kombination, **dadurch gekennzeichnet, dass** die Mittel zum Freigeben der komplementären axialen Abstützungen einen am Keil (60) ausgebildeten Freigabenocken (65) aufweisen, der dazu vorgesehen ist, mit einem komplementären Abschnitt (66) des Arms zusammenzuwirken, wenn dieser Keil (60) am festen Ruheanschlag (62) anliegt.

6. Servomotor nach Anspruch 4 oder 5, **dadurch gekennzeichnet, dass** der Weg des zweiten Abschnitts (20B) des Steuerorgans (20) begrenzt ist:
- nach hinten und in Bezug auf den Keil (60) durch einen hinteren Anschlag (70), der an diesem Keil (60) ausgebildet ist,
- nach vorne und in Bezug auf den ersten Abschnitt (20A) des Steuerorgans (20) durch einen vorderen Anschlag (72), der an diesem ersten Abschnitt (20A) des Steuerorgans (20) ausgebildet ist.

7. Servomotor nach einem der Ansprüche 4 bis 6, **dadurch gekennzeichnet, dass** das Steuerorgan (20) eine allgemeine umlaufende Form mit der Achse (X) aufweist, die im Wesentlichen mit der des Halters (44) zusammenfällt, wobei die Mittel (52) zum Einstellen der relativen axialen Stellung der beiden Abschnitte (20A, 20B) des Steuerorgans (20) mindestens drei Keile (60) und drei Arme (56) aufweisen, die winkelmäßig um die Drehachse (X) des Steuerorgans (20) verteilt sind.

8. Servomotor nach Anspruch 7, **dadurch gekennzeichnet, dass** die Keile (60) durch einen Verbindungsring (67) miteinander verbunden sind, der gleitend am Halter (44) angebracht ist.

9. Servomotor nach einem der Ansprüche 4 bis 8, **dadurch gekennzeichnet, dass** er Mittel (74) zum elastischen Zurückstellen aufweist, die jeden Keil (60) und den Halter (44) weg voneinander beaufschlagen, um insbesondere den Halter (44) zum Kolben (22) zurückzustellen und somit diesen Halter (44) elastisch an die Bewegungen des Kolbens (22) zu koppeln.

10. Servomotor nach einem der Ansprüche 3 bis 9, **dadurch gekennzeichnet, dass** jeder Arm (56), der vorzugsweise metallisch ist, durch elastische Verformung dieses Arms (56) in eine Stellung zurückgestellt wird, in der die komplementären Abstützungen (B, B1) zusammenwirken.

11. Servomotor nach einem der Ansprüche 3 bis 10, **dadurch gekennzeichnet, dass** jeder Arm (56) axial mit dem ersten Abschnitt (20A) des Steuerorgans (20) fest verbunden ist.

12. Servomotor nach Anspruch 11, **dadurch gekennzeichnet, dass** jeder Arm (56) mit einem ringförmigen Metallhalter (58) einstückig ausgebildet ist, der ein vorderes Ende des ersten Abschnitts (20A) des Steuerorgans (20) bildet.

13. Servomotor nach einem der vorhergehenden Ansprüche, **dadurch gekennzeichnet, dass** er Mittel (40) zum elastischen Zurückstellen aufweist, die den zweiten Abschnitt (20B) des Steuerorgans (20) und den pneumatischen Kolben (22) voneinander weg beaufschlagen.

14. Servomotor nach einem der vorhergehenden Ansprüche, **dadurch gekennzeichnet, dass** er einen Taster (34) aufweist, der zur Übertragung einer Kraft zwischen dem Steuerorgan (20) und einer Stange (12) zur Betätigung eines Hauptzylinders vorgesehen ist, wobei dieser Taster (34) axial einerseits zwischen einer ersten Anlagefläche (R) und einer zweiten Anlagefläche (A'), die dazu vorgesehen sind, axial mit der Betätigungsstange (12) verbunden zu sein, und andererseits zwischen der ersten Anlagefläche (R), die dazu vorgesehen ist, mit der Betätigungsstange (12) verbunden zu sein, und einer Anlagefläche (A), die axial mit dem Steuerorgan (20) verbunden ist, eingesetzt ist.

15. Servomotor nach Anspruch 14, **dadurch gekennzeichnet, dass** die erste Anlagefläche (R), die dazu vorgesehen ist, mit der Betätigungsstange (12) verbunden zu sein, eine Reaktionsscheibe (36) begrenzt, die axial elastisch verformbar und dazu vorgesehen ist, axial mit der Betätigungsstange (12) verbunden zu sein.

16. Servomotor nach Anspruch 14 oder 15, **dadurch gekennzeichnet, dass** die zweite Anlagefläche (A'), die dazu vorgesehen ist, mit der Betätigungsstange (12) verbunden zu sein, ein Ende eines Versteifungsrings (66) begrenzt, der von einem Organ (28) zur axialen Führung des Steuerorgans (20) getragen ist, wobei die axial mit dem Steuerorgan (20) verbundene Anlagefläche (A) einen Stützreif (38) begrenzt, der im Stützring (66) aufgenommen ist.

17. Servomotor nach einem der vorhergehenden Ansprüche, **dadurch gekennzeichnet, dass** die pneumatische Druckquelle atmosphärische Luft ist.

18. Bremssteuerungsvorrichtung, **dadurch gekennzeichnet, dass** sie von einem Servomotor nach einem der vorhergehenden Ansprüche angesteuert wird.
